# EUROPEAN PATENT SPECIFICATION

(11) **EP 1 312 184 B1**
(45) Date of publication and mention of the grant of the patent: **11.03.2009**
(21) Application number: 01971876.6
(22) Date of filing: 06.08.2001
(51) Int. Cl.: H04L 12/28, H04L 12/56

(54) **METHOD AND DEVICE FOR ASSIGNING ACCESS MECHANISMS**
VERFAHREN UND GERÄT ZUR ZUWEISUNG VON ZUGRIFFSMECHANISMEN
AFFECTATION D'UN MECANISME D'ACCES

(30) Priority: 18.08.2000 GB 0020303
(43) Date of publication of application: 21.05.2003
(73) Proprietor: MOTOROLA, INC., Schaumburg, IL 60196 (US)
(72) Inventor: GIBBS, Jonathan, Alastair, Southampton, Hampshire SO30 2XF (GB); AFTELAK, Stephen, Basil, Swindon, Wiltshire SN1 4JP (GB); BADEN, Charlotte, Catherine, Malmesbury, Wiltshire SN16 9HL (GB)
(74) Representative: Jepsen, René Pihl
(86) International application number: PCT/EP2001/009079
(87) International publication number: WO 2002/017565

(56) References cited:
- WO-A-01/24428
- WO-A-01/86466
- US-A- 6 006 264
- US-A- 6 108 307
- US-B1- 6 188 698

## Description

This invention relates to assigning an access mechanism to data for transmission over a communications network.

On various communications networks it is possible to use different access mechanisms to encode and deliver different categories of information. An access mechanism is the means of connecting user apparatus ( eg. a mobile telephone, fixed telephone, personal computer or other device requiring access through a communications system. For example, a typical fixed telephone in the home is hard wired to the local exchange. For a cellular telephone system the access mechanism is the air interface which includes the link (eg. radio) from/to the base station, the onward link from/to the base station controller or radio network controller, and the attendant procedures and protocols that enable transmission and reception.

An example of a communications network over which different categories of information can be sent is a Third Generation (3G) mobile network such as UMTS (the Universal Mobile Telecommunications System), or an enhanced Second Generation (2G) mobile network incorporating a General Packet Radio Service (GPRS). These are in general able to support speech (not using GPRS), music, video and text communications. The data is sent in blocks or packets and re-assembled and decoded at the receiver device. Typically, a multi-media service will involve data from some or all of these categories and additional data for on-line messaging. Each form of data has different requirements of the means by which it is encoded for transmission (or broadcast) from source or relay point to recipient(s).

Examples of communication networks for different data are disclosed in United States Patent US 6,006,264 which describes a switch that chooses an appropriate server for information transfer depending upon content. US 6,108,307 describes a switch that determines appropriate network connections for data and queues the data depending upon priority. US 6,188,698 describes a transmission system that schedules data according to priority class and connection class. WO 01/24428 A1 describes a data scheduler that queues and prioritizes transmissions depending upon service class. WO 01/86466 A2 describes the scheduling of a processor pool used in the handling of data connections.

To take the multi-media example, the priorities associated with the different data components differ. Video data may have a demanding requirement for both minimal delay in the transmitted data and a high bit rate. Voice and music (audio) information may place a high demand on delay to avoid impairing the quality of the perceived sound, but are less demanding on the bit rate. Text data is more tolerant of delays in the transmitted information as it can be buffered before being assembled at the recipient device, but it is more heavily dependent on the integrity of the access mechanism to transmit the data accurately. Thus, an access mechanism designed to optimise transmission for one class of data could cause a degradation in the quality of service when used in respect of another class or, conversely, be too wasteful of network capacity.

As well as the inherent (fixed) characteristics of an access mechanism, there may also be characteristics that change with time and/or changes in the environment in which the network access mechanism in used.

It is known in circuit switched communications systems, such as those covered by the ITU-T recommendations G.703, G.704 which use 64kbit/sec time slotted pulse code modulated signalling, to pool slots for transmission of a given form of information. However, this only addresses access requirements in respect to the same access mechanism. It does not differentiate between disparate requirements of the forms of information to be sent.

It is an object of the present invention to address the differing requirements of different forms of information to be transmitted over a given network.

According to one embodiment of the present invention, there is provided a method of assigning an access mechanism to data to be transmitted between a sender and a recipient, the method comprising: grading each of a set of access mechanisms according to at least one parameter; classifying a plurality of components of the data according to a quality requirement of the access mechanism with respect to the at least one parameter; matching the class to which each of the plurality of data components belongs to the grading of the access mechanisms; and assigning a first of the plurality of data components to a first access mechanism according to the outcome of the matching; and assigning at least a second of the plurality of data components to a second access mechanism different from the first access mechanism according to the outcome of the matching.

The invention treats each component of data according to its own requirements of the parameter and assigns an access mechanism accordingly. It is then possible to match the most appropriate available access mechanism to balance quality of service against network efficiency.

The grading of the access mechanisms may be predefined. In that case the parameter may be one inherent to the access mechanism itself, such as bandwidth. However, the grading could be dynamic in the sense that the parameter is monitored while a particular access mechanism is enabled for sending data.

Typical changeable parameters include bandwidth, signal to noise ratio, signal to interference or signal to noise plus interference ratio, link delay, access mechanism occupancy, network layer capacity. Furthermore, the dynamically changing environment in which an access mechanism is used can be monitored as well. The changes may be due to environmental changes at the location of the network layer, i.e. due to changes in the environment itself, or movement of the sender or recipient within the environment.

Preferably, the classified data components are matched to the lowest acceptable quality of service from the available access mechanisms according to the parameters which are assessed in respect of the class of data. It is inefficient to take up an inappropriately high quality access mechanism with a service that requires low grade access in respect of the monitored parameter(s). To assign data components to access mechanisms according to this invention is intended to maintain system efficiency.

As a practical matter, the matching of classified data to an access mechanism will be dependent on the access mechanisms available at the time. If the most suitable access mechanism is unavailable, the method may include performing a best fit of the classified data to available access mechanisms according to the parameter which is of primary consideration, or a further parameter of a secondary consideration, in respect of a particular class of data. However, it is also preferable that the method includes the ability to deny access to a particular access mechanism by a class of data when it would be inadequately supported by any of the available access mechanisms or when the only available access mechanisms represent an inefficient use of the network to an unacceptable extent.

In one form, the invention includes a transmitter for transmitting data comprising a plurality of data components using a plurality of selected access mechanisms, the transmitter comprising: a router which is responsive to an input to assign a first of the plurality of data components to a first access mechanism to assign at least a second of the plurality of data components to a second access mechanism different from the first access mechanism; a controller arranged to derive a signal indicative of a class to which each data component belongs according to a quality requirement of the access mechanisms with respect to at least one parameter and to match the class to the set of access mechanisms which are graded according to the at least one parameter and to produce the input for the router according to the outcome of the matching.

The invention also extends to a communication network having a transmitter as referred to above.

The present invention can be put into practice in various ways, some of which will now be described by way of example with reference to the accompanying drawings in which:
Figure 1 is a schematic block diagram of a transmission system according to the invention;
Figure 2 is a flow diagram of the method of the invention;
Figure 3 is a schematic block diagram of a receiver according to the invention; and
Figure 4 is a further embodiment of a system according to the invention.

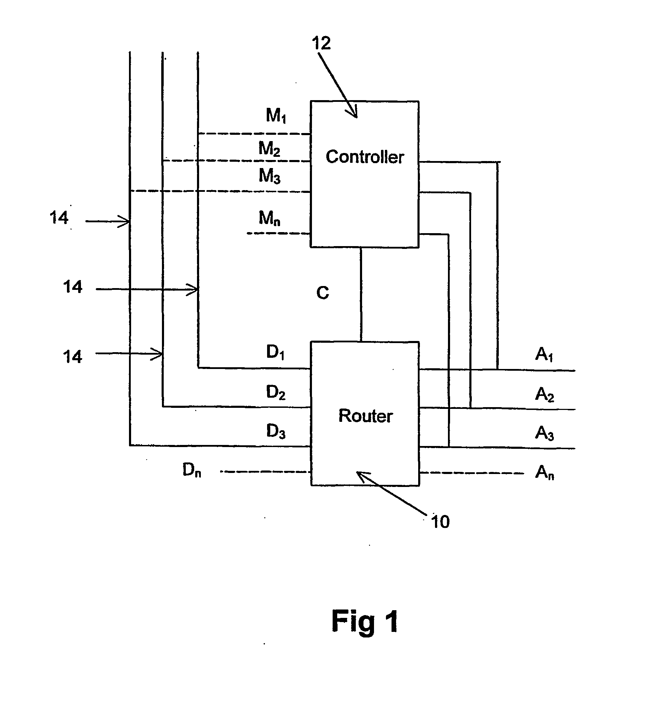

Referring to Figure 1, a transmitter comprises a router 10 and a controller 12. In this example the system is based on the joint use of a set of air interface access mechanisms which include Second Generation (2G) techniques such as GSM and GPRS, so-called '2.5G' techniques such as Enhanced Data Rates for GSM Evolution (EDGE), and Third Generation (3G) techniques such as WCDMA and TD-CDMA. Individual access techniques in this set can support a range of different types of data characteristic suitable for circuit switched and/or packet-based transmission. Incoming data for transmission comprises a plurality of data components D1, D2...Dn received at the router 10 on input lines 14. The controller 12 classifies the incoming data by monitoring the data for an identification (Ml, M2... Mn) of the type of data on each input line 14. The identification is provided with the data in the form of an identifier signal. The router 10 is able to assign the data components to a particular access mechanism comprising an air interface, encoding scheme and/or network or transport layer in response to a command signal C from the controller 12.

The identification can be in the form of a header or field within the data stream or contained in a separate but associated channel. The signal C from the controller 12 configures the router 10 to direct the prepared data component to which the identification relates to the most appropriate access mechanism A1, A2...An from the router. The access mechanisms A1-n are shown as separate lines in Figure 1 for the purposes of illustration. The data in the various forms is actually packet or circuit switched over the network in a conventional manner. The access mechanism actually comprises the coding scheme, and associated transport layer and links nominated for a particular class of data.

By way of example, the data on line D1 may be classified by the controller 12 as video data. Thus, the most appropriate access mechanism may be wideband code division multiple access (WCDMA) for example, which is an option of the Universal Mobile Telecommunications System (UMTS), due to the requirements for low delay and high bit rate in video data transmission. Data on line D2 may be classified by the controller 12 as a voice communication requiring minimal delay, but being relatively narrow band, and can most usefully be transmitted by Global System for Mobile Communications (GSM) time division multiple access (TDMA). Text or other data may most appropriately be carried on the time division-code division multiple access (TD-CDMA) option of UMTS as it is relatively tolerant of delays, but requires high integrity transmission for reliable data recovery. The total data signal thus comprises a video component D1, an audio component D2 and a text (eg subtitles) component. Each of these components of the service have different requirements of the access mechanisms.

These are examples of the types of data and the access mechanisms available which are switched on to the network. It will be clear to the person of ordinary skill in the art that separate data streams in the same category may also be submitted for transmission simultaneously. Furthermore, more than one access mechanism of the same type may be provided. Thus, at any one time there will be a profile of data transmission requirements and a profile of available access mechanisms. When the access mechanism most suited to the data of a particular category is available, the choice is straightforward. However, in the situation in which the incoming data must be assigned to a non-optimal access mechanism, the choice has to be made on modified criteria. The basic concept in accordance with maintaining system efficiency is to choose the lowest grade access mechanism available sufficient to support the data type. Thus, the controller 12 is arranged to assign the available access mechanism next most appropriate to the data type. The priority placed on the quality of a particular parameter will be different for each class of data.

An example of a possible priority listing by data type is given in the following table. Note that the priorities shown are not meant to be definitive and may change depending on a number of issues and their relative importance (e.g. technical factors, cost factors, environment factors). Thus, the decision to assign a class of data to a particular access mechanism will be subject to the circumstances surrounding the set of access mechanisms to which the router has access.

| **Data Class** | **1st choice Access Mechanism** | **2nd choice Access Mechanism** | **3^{rd} choice Access Mechanism** |
|---|---|---|---|
| Interactive video | Cable | HiperLAN | WCDMA |
| Streaming video | HiperLAN | TD-CDMA | GPRS |
| Interactive Voice | GSM | WCDMA | TD-CDMA |
| Data | Wired LAN | TD-CDMA | WCDMA |

In the table 'HiperLAN' refers to the wireless local area network as defined by the European Technical Standards Institute (ETSI). Wired LAN is the conventional local area network arrangement.

Another parameter that can be assigned to the incoming data components is a level of urgency or priority. By further classifying the data hierarchically in this way it can be given priority access and/or be assigned to particularly low delay coding, transport layer, links, etc.

The controller 12 maintains a database of the access mechanisms and their usage. By reference to the database it is able to assign available access mechanisms based on the classification of the incoming data. There will also be occasions when no access mechanism is available, or no appropriate access mechanism is available. This latter occasion may be because the available access mechanisms are unable to support the data type or the use of the available access mechanisms would constitute an unacceptable use of the network, e.g. the use of a wideband cable channel for voice communications is wasteful of network capacity. In this case, the controller is arranged to deny access to the network to that data type until a more suitable access mechanism becomes available. Note that having a set of available access mechanisms of the same type significantly reduces the probability of this case occurring.

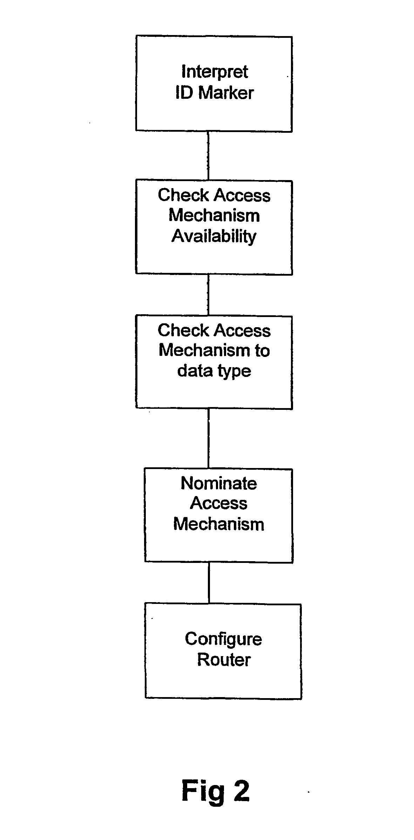

The data type is routed by the router 10 to the appropriate encoding scheme, submitted to the appropriate access mechanism (e.g. air interface) and transmitted in a conventional manner. The sequence of steps in assigning an access mechanism and configuring the router is set out in the flow chart of Figure 2.

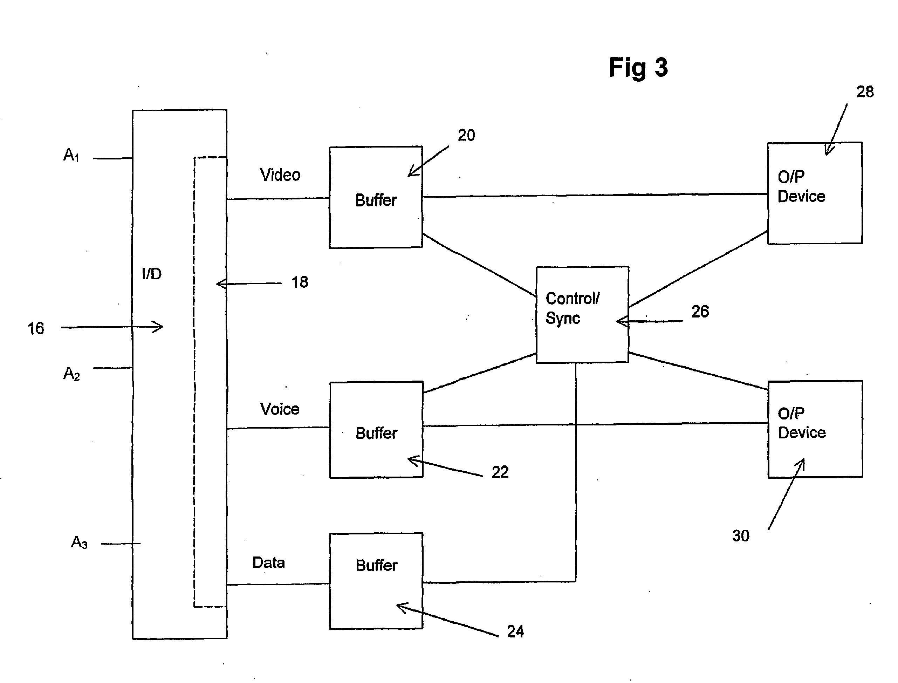

Figure 3 illustrates a receiver according to the invention. This example is an arrangement for handling multi-media data comprising video, voice/music and low bit rate messaging. The packets of data are received at an input device 16 according to access mechanisms A₁, A₂, A₃ shown here for convenience as separate data streams for the video, voice/music and messaging. The input device 16 includes a controller part 18 which identifies the access mechanism used for transmission. The data is then reassembled and decoded in conventional manner and applied to buffers 20,22 and 24. As is conventional, the video and voice/music data blocks or packets have timing markers (t₁, t₂) which are fed to a synchroniser 26 which, if required, synchronise the video and voice/music output of the buffers 20 and 22 to output devices 28 and 30 which, in this embodiment, are a display device and sound system, respectively.

It will be appreciated that the video, voice/music and messaging received will have been supported by one access mechanism or another, as determined by the controller 12. To set up the receiver to accept data according to the elected access mechanism for each form of data, conventional mechanisms are used to establish the link between transmitter and receiver according to the normal practice for the access mechanism. By this means the appropriate protocols are established to set up the multi-media reception.

As mentioned above, consideration can be given to both inherent access mechanism parameters and those associated with the environment in which the access mechanism is used. Once an access mechanism has been elected and implemented, and a link has been established according to the availability criteria referred to above, the link quality can be monitored and on-going decisions taken on changing access mechanisms during transmission.

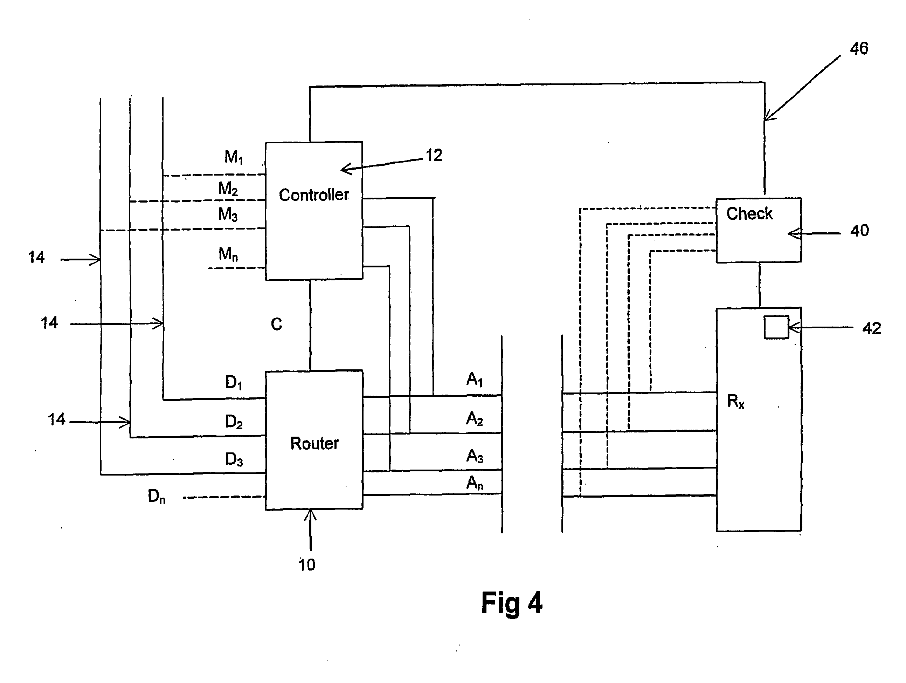

In this regard, Figure 4 illustrates a further embodiment of the invention. The router 10 and the controller 12 are broadly the same as those in Figure 1. However, at the receiver the data is continually or periodically checked by a monitoring unit 40. This is arranged to monitor the data by the use of, for example, data error checking procedures, signal to noise and/or signal to interference estimation methods. Additionally, the monitoring unit 40 is linked directly to the receiver which has a manual reject button 42 in the receiver 44. Degradation in the quality of a link is often subjective in the case of, for example, voice/music or video reception. Thus, while objective on-line data error assessment can be carried out by monitoring as described, the invention provides the facility for the receiver user to reject the quality of the incoming data or to request an enhanced quality of service. By actuating the reject button 42, an overriding access mechanism change request is sent back to the controller 12 as illustrated by line 46. The line 46 is indicative of a notional path back to the receiver, but it is not to be considered as a particular path. The actual information fed back may be transmitted via one of the available access mechanisms by which the transmitter and receiver are interlinked. The controller 12 responds by polling the available access mechanisms and substituting one for another in the event that a more appropriate access mechanism has become available since the rejected link was established. If a more appropriate access mechanism is not available, an advisory message is transmitted as text data to the receiver for display to the user.

Link degradation can be due to various phenomena. With mobile access, the opportunity for the environment to vary is greatly increased. For example, a receiver can be taken into a position in, for example, a built-up area where there is a reception shadow caused by a building. Thus, this embodiment of the invention is also able to swap between equivalent access mechanisms or between cellular network layers in response to the monitoring and feedback. As is conventional in the art, a network such as GSM (possibly running GPRS) or UMTS comprises a macrolayer for wide area network applications, microlayers typically arranged in built-up areas below roof-top to handle traffic in street canyon environments, and a picolayer for in-building local traffic. Depending on circumstances, the invention is operable to switch between layers, as constituent parts of the access mechanisms, as appropriate.

The invention is applicable to Wireless Applications Protocol (WAP) Systems, Bluetooth piconets and scatternets, and iMODE communications systems and other communications networks able to support different categories of data and different access mechanisms.

## Claims

1. A method of assigning an access mechanism to data to be transmitted between a sender and a recipient, the method **characterized by** comprising:
grading each of a set of access mechanisms (A₁...Aₙ) according to at least one parameter;
classifying (14) a plurality of components of the data according to a quality requirement of the access mechanism with respect to the at least one parameter;
matching the class to which each of the plurality of data components belongs to the grading of the access mechanisms (A₁...Aₙ) ; and
assigning (14) a first of the plurality of data components to a first access mechanism according to the outcome of the matching; and
assigning at least a second of the plurality of data components to a second access mechanism different from the first access mechanism according to the outcome of the matching.

2. A method as claimed in claim 1 in which the access mechanisms (A₁...Aₙ) are graded according to at least one of the signal to noise ratio, signal to interference ratio, signal to noise plus interference ratio, reliability, data rate, bandwidth, delay and occupancy.

3. A method as claimed in claim 1 or 2 in which each of the set of access mechanisms (A₁...Aₙ) includes a coding scheme, a transport layer and a communications link type.

4. A method as claimed in claim 1, 2 or 3, including denying assigning of an access mechanism when the available access mechanisms(A₁...Aₙ) do not include one of a requisite minimum capacity or set of capacities in respect of a selected parameter or set of parameters for the class of data.

5. A method as claimed in claim 3 or 4, including denying assignment of an access mechanism when those available only consist of ones of a predetermined over capacity in respect of one or more of the parameters.

6. A method as claimed in any of claims 1 to 5, including monitoring the set of access mechanisms (A₁...Aₙ) to determine which are available.

7. A method as claimed in claim 6 in which the at least one parameter is the degree of occupancy of each of the set of access mechanisms, (A₁...Aₙ) the method further including monitoring each access mechanism to determine the capacity available from each access mechanism.

8. A method as claimed in claim 6 in which the at least one parameter is a quality of the access mechanism for supporting the data according to its class.

9. A method as claimed in claim 8 including monitoring the access mechanism according to the parameter.

10. A method as claimed in claim 9 including monitoring the data at a receiving end of the access mechanism.

11. A method as claimed in any of claims 6 to 10, including updating a database on the access mechanisms (A₁...Aₙ) available to each class of data in response to the monitoring.

12. A method of transmitting data including a method of assigning an access mechanism as claimed in any of claims 1 to 11 and routing the data to one of the access mechanisms (A₁...Aₙ) according to the outcome of the matching such that the assigned access mechanism is optimally appropriate to utilisation of the set of access mechanisms.

13. A transmitter for transmitting data comprising a plurality of data components using a plurality of selected access mechanisms (A₁...Aₙ), the transmitter **characterized by** comprising:
a router (10) which is responsive to an input to assign a first of the plurality of data components to a first access mechanism to assign at least a second of the plurality of data components to a second access mechanism different from the first access mechanism;
a controller (12) arranged to derive a signal indicative of a class to which each data component belongs according to a quality requirement of the access mechanisms (A₁...Aₙ) with respect to at least one parameter and to match the class to the set of access mechanisms (A₁...Aₙ) which are graded according to the at least one parameter and to produce the input for the router according to the outcome of the matching.

14. A transmitter according to claim 13 in which the controller (12) is arranged to read a header within the data for deriving said signal indicative of a class which to which data belongs.

15. A transmitter according to claim 13 in which the controller (12) is arranged to receive an input separate from the data for deriving said signal indicative of a class to which the data belongs.

16. A transmitter as claimed in claim 13, 14 or 15 in which the controller (12) is arranged to grade the access mechanisms according to the at least one parameter selected from the group comprising signal to noise ratio, signal to interference ratio, signal to noise plus interference ratio, reliability, bandwidth, delay and occupancy.

17. A transmitter as claimed in claim 13 in which the controller (12) comprises a database and is operable to update information in the database on the access mechanisms (A₁...Aₙ) available to each class of data.

18. A transmitter as claimed in claim 13, 14 or 15 in which the controller (12) is arranged to monitor the access mechanisms (A₁...Aₙ) to feed back a signal indicative of the state of the at least one parameter.

19. A transmitter as claimed in claim 18 in which the controller (12) is arranged to monitor the at least one parameter selected from the group comprising signal to noise ratio, signal to interference ratio, signal to noise plus interference ratio, reliability, delay and occupancy as the parameter.

20. A transmitter as claimed in any of claims 18 or 19 in which the controller (12) is operable to update the database in response to the feedback signal from the monitoring device.

21. A communications network comprising a transmitter as claimed in any of claims 13 to 20.

## Patentansprüche

1. Verfahren zum Zuweisen eines Zugriffsmechanismus auf zwischen einem Sender und einem Rezipienten zu übertragende Daten, wobei das Verfahren **dadurch gekennzeichnet ist, dass** es umfasst:
Sortieren eines jeden Mechanismus aus einem Satz von Zugriffsmechanismen (A₁...Aₙ) gemäß mindestens einem Parameter;
Klassifizieren (14) einer Mehrzahl von Komponenten der Daten gemäß einem Qualitätserfordernis des Zugriffsmechanismus bezüglich des mindestens einen Parameters;
Abgleichen der Klasse, zu der jede der Mehrzahl von Datenkomponenten gehört, mit der Sortierung der Zugriffsmechanismen (A₁...Aₙ); und
Zuweisen (14) einer ersten der Mehrzahl von Datenkomponenten zu einem ersten Zugriffsmechanismus gemäß dem Ergebnis des Abgleichens; und
Zuweisen mindestens einer zweiten der Mehrzahl von Datenkomponenten zu einem zweiten Zugriffsmechanismus, der von dem ersten Zugriffsmechanismus verschieden ist, gemäß dem Ergebnis des Abgleichens.

2. Verfahren gemäß Anspruch 1, wobei die Zugriffsmechanismen (A₁...Aₙ) gemäß dem Signal-Rausch-Verhältnis, dem Signal-Störungs-Verhältnis, dem Signal-Rausch plus Störungs-Verhältnis, der Zuverlässigkeit, der Datenrate, der Bandbreite, der Verzögerung und/oder der Belegung sortiert werden.

3. Verfahren gemäß Anspruch 1 oder 2, wobei jeder von dem Satz von Zugriffsmechanismen (A₁...Aₙ) ein Codierschema, eine Transportschicht und eine Kommunikationsverbindungsart umfasst.

4. Verfahren gemäß Anspruch 1, 2 oder 3, das umfasst:
Verweigern eines Zuweisens eines Zugriffsmechanismus, wenn die zur Verfügung stehenden Zugriffsmechanismen (A₁...Aₙ) keine erforderliche minimale Kapazität oder keinen Satz von Kapazitäten bezüglich eines ausgewählten Parameters oder Satzes von Parametern für die Klasse von Daten umfassen.

5. Verfahren gemäß Anspruch 3 oder 4, das umfasst:
Verweigern einer Zuweisung eines Zugriffsmechanismus, wenn diese zur Verfügung stehenden nur aus solchen mit einer vorbestimmten Überkapazität bezüglich eines oder mehrerer der Parameter bestehen.

6. Verfahren gemäß einem der vorangehenden Ansprüche 1 bis 5, das umfasst: Überwachen des Satzes von Zugriffsmechanismen (A₁...Aₙ), um zu bestimmen, welche zur Verfügung stehen.

7. Verfahren gemäß Anspruch 6, wobei der mindestens eine Parameter das Ausmaß an Belegung eines jeden des Satzes von Zugriffsmechanismen (A₁...Aₙ) ist, wobei das Verfahren weiterhin umfasst: Überwachen eines jeden Zugriffsmechanismus, um die von jedem Zugriffsmechanismus zur Verfügung stehende Kapazität zu bestimmen.

8. Verfahren gemäß Anspruch 6, wobei der mindestens eine Parameter eine Qualität des Zugriffsmechanismus zum Unterstützen der Daten gemäß ihrer Klasse ist.

9. Verfahren gemäß Anspruch 8, das umfasst: Überwachen des Zugriffsmechanismus gemäß dem Parameter.

10. Verfahren gemäß Anspruch 9, das umfasst: Überwachen der Daten bei einem empfangenden Ende des Zugriffsmechanismus.

11. Verfahren gemäß einem der Ansprüche 6 bis 10, das umfasst: Aktualisieren einer Datenbank der Zugriffsmechanismen (A₁...Aₙ), die jeder Klasse von Daten zur Verfügung stehen, in Reaktion auf die Überwachung.

12. Verfahren zur Übertragung von Daten, das umfasst: ein Verfahren eines Zuweisens eines Zugriffsmechanismus gemäß einem der Ansprüche 1 bis 11 und eines Weiterleitens der Daten zu einem der Zugriffsmechanismen (A₁...Aₙ) gemäß dem Ergebnis des Abgleichens, so dass der zugewiesene Zugriffsmechanismus für eine Verwendung des Satzes von Zugriffsmechanismen optimal geeignet ist.

13. Sender zum Übertragen von Daten, die eine Mehrzahl von Datenkomponenten umfassen, unter Verwendung einer Mehrzahl von ausgewählten Zugriffsmechanismen (A₁...Aₙ), wobei der Sender **dadurch gekennzeichnet ist, dass** er umfasst:
einen Router (10), der auf eine Eingabe anspricht, um eine erste Datenkomponente von der Mehrzahl von Datenkomponenten einem ersten Zugriffsmechanismus zuzuweisen und mindestens eine zweite Datenkomponente der Mehrzahl von Datenkomponenten einem zweiten Zugriffsmechanismus zuzuweisen, der von dem ersten Zugriffsmechanismus verschieden ist;
eine Steuerung (12), die angeordnet ist, um ein Signal zu erlangen, das eine Klasse anzeigt, zu der jede Datenkomponente gehört, gemäß einem Qualitätserfordernis der Zugriffsmechanismen (A₁...Aₙ) bezüglich mindestens eines Parameters, und um die Klasse mit dem Satz von Zugriffsmechanismen (A₁...Aₙ) abzugleichen, die gemäß dem mindestens einem Parameter sortiert sind, und um die Eingabe für den Router gemäß dem Ergebnis des Abgleichens zu erzeugen.

14. Sender gemäß Anspruch 13, wobei die Steuerung (12) angeordnet ist, um einen Header in den Daten zu lesen, um das Signal, das eine Klasse anzeigt, zu der die Daten gehören, zu erlangen.

15. Sender gemäß Anspruch 13, wobei die Steuerung (12) angeordnet ist, um eine Eingabe getrennt von den Daten zum Erlangen des Signals zu empfangen, das eine Klasse anzeigt, zu der die Daten gehören.

16. Sender gemäß Anspruch 13, 14 oder 15, wobei die Steuerung (12) angeordnet ist, um die Zugriffsmechanismen gemäß dem mindestens einen Parameter zu sortieren, der aus der Gruppe ausgewählt wird, die ein Signal-Rausch-Verhältnis, ein Signal-Störungs-Verhältnis, ein Signal-Rausch plus Störungs-Verhältnis, eine Zuverlässigkeit, eine Bandbreite, eine Verzögerung und eine Belegung umfasst.

17. Sender gemäß Anspruch 13, wobei die Steuerung (12) eine Datenbank umfasst und betreibbar ist, um Informationen in der Datenbank über die Zugriffsmechanismen (A₁...Aₙ) zu aktualisieren, die jeder Klasse von Daten zur Verfügung stehen.

18. Sender gemäß Anspruch 13, 14 oder 15, wobei die Steuerung (12) angeordnet ist, um die Zugriffsmechanismen (A₁...Aₙ) zu überwachen, um ein Signal rückzukoppeln, das den Zustand des mindestens einen Parameters anzeigt.

19. Sender gemäß Anspruch 18, wobei die Steuerung (12) angeordnet ist, um den mindestens einen Parameter zu überwachen, der aus der Gruppe ausgewählt wird, die als den Parameter ein Signal-Rausch-Verhältnis, ein Signal-Störungs-Verhältnis, ein Signal-Rausch plus Störungs-Verhältnis, eine Zuverlässigkeit, eine Verzögerung und eine Belegung umfasst.

20. Sender gemäß einem der vorangehenden Ansprüche 18 oder 19, wobei die Steuerung (12) betreibbar ist, um die Datenbank in Reaktion auf das Rückkopplungssignal von der Überwachungsvorrichtung zu aktualisieren.

21. Kommunikationsnetzwerk, das einen Sender gemäß einem der Ansprüche 13 bis 20 umfasst.

## Revendications

1. Procédé d'affectation d'un mécanisme d'accès à des données à transmettre entre un envoyeur et un destinataire, le procédé étant **caractérisé en ce qu'**il comprend les étapes consistant à :
catégoriser chaque mécanisme d'un ensemble de mécanismes d'accès (A₁...Aₙ) selon au moins un paramètre ;
classifier (14) une pluralité de composants des données selon une exigence de qualité du mécanisme d'accès relativement à l'au moins un paramètre ;
établissement d'une correspondance entre la classe à laquelle appartient chaque composant de la pluralité de composants de données et les catégories des mécanismes d'accès (A₁...Aₙ) ; et
affecter (14) un premier de la pluralité de composants de données à un premier mécanisme d'accès en fonction du résultat de l'établissement de correspondance ; et
affecter au moins un deuxième de la pluralité de composants de données à un deuxième mécanisme d'accès, différent du premier mécanisme d'accès, en fonction du résultat de l'établissement de correspondance.

2. Procédé selon la revendication 1, dans lequel les mécanismes d'accès (A₁...Aₙ) sont catégorisés selon au moins l'un des paramètres suivants : rapport signal sur bruit, rapport signal sur interférences, rapport signal sur bruit plus interférences, fiabilité, débit des données, bande passante, temps de propagation et degré d'occupation.

3. Procédé selon la revendication 1 ou 2, dans lequel chaque mécanisme de l'ensemble de mécanismes d'accès (A₁...Aₙ) a un schéma de codage, une couche de transport et un type de liaison de communication.

4. Procédé selon la revendication 1, 2 ou 3, comprenant le refus de l'affectation d'un mécanisme d'accès lorsque les mécanismes d'accès (A₁...Aₙ) disponibles ne comprennent pas l'une d'une capacité ou d'un ensemble de capacités requis au minimum relativement à un paramètre ou un ensemble de paramètres sélectionné pour la classe de données.

5. Procédé selon la revendication 3 ou 4, comprenant le refus de l'affectation d'un mécanisme d'accès lorsque ceux qui sont disponibles ne sont que des mécanismes ayant un dépassement de capacité prédéterminé relativement à un ou plusieurs des paramètres.

6. Procédé selon l'une quelconque des revendications 1 à 5, comprenant la surveillance de l'ensemble de mécanismes d'accès (A₁...Aₙ) pour déterminer lesquels sont disponibles.

7. Procédé selon la revendication 6, dans lequel l'au moins un paramètre est le degré d'occupation de chaque mécanisme de l'ensemble de mécanismes d'accès (A₁...Aₙ), le procédé comprenant, en outre, la surveillance de chaque mécanisme d'accès pour déterminer la capacité disponible auprès de chaque mécanisme d'accès.

8. Procédé selon la revendication 6, dans lequel l'au moins un paramètre est une qualité du mécanisme d'accès permettant le traitement des données selon leur classe.

9. Procédé selon la revendication 8, comprenant la surveillance du mécanisme relativement à un paramètre.

10. Procédé selon la revendication 9, comprenant la surveillance des données à une extrémité réceptrice du mécanisme d'accès.

11. Procédé selon l'une quelconque des revendications 6 à 10, comprenant la mise à jour d'une base de données sur les mécanismes d'accès (A₁...Aₙ) disponibles pour chaque classe de données, en réponse à la surveillance.

12. Procédé de transmission de données comprenant un procédé d'affectation d'un mécanisme d'accès selon l'une quelconque des revendications 1 à 11, et d'acheminement des données vers l'un des mécanismes d'accès (A₁...Aₙ) en fonction du résultat de l'établissement de correspondance, de telle sorte que le mécanisme d'accès attribué soit approprié de façon optimale à l'utilisation de l'ensemble de mécanismes d'accès.

13. Emetteur pour la transmission de données comprenant une pluralité de composants de données, au moyen d'une pluralité de mécanismes d'accès (A₁...Aₙ) sélectionnés, **caractérisé en ce qu'**il comprend :
un routeur (10) qui réagit à un signal d'entrée pour affecter un premier de la pluralité de composants de données à un premier mécanisme d'accès pour affecter au moins un deuxième de la pluralité de composants de données à un deuxième mécanisme d'accès, différent du premier mécanisme d'accès ;
un contrôleur (12) configuré pour déduire un signal indicatif d'une classe à laquelle appartient chaque composant de données en fonction d'une exigence de qualité des mécanismes d'accès (A₁...Aₙ) relativement à au moins un paramètre, et pour établir une correspondance entre la classe et l'ensemble de mécanismes d'accès (A₁...Aₙ) qui sont catégorisés selon l'au moins un paramètre, et pour produire le signal d'entrée destiné au routeur en fonction du résultat de l'établissement de correspondance.

14. Emetteur selon la revendication 13, dans lequel le contrôleur (12) est configuré pour lire un en-tête contenu dans les données et en déduire ledit signal indicatif d'une classe à laquelle appartiennent les données.

15. Emetteur selon la revendication 13, dans lequel le contrôleur (12) est configuré pour recevoir un signal d'entrée distinct des données et en déduire ledit signal indicatif d'une classe à laquelle appartiennent les données.

16. Emetteur selon la revendication 13, 14 ou 15, dans lequel le contrôleur (12) est configuré pour catégoriser les mécanismes d'accès selon l'au moins un paramètre, sélectionné dans le groupe comprenant : le rapport signal sur bruit, le rapport signal sur interférences, le rapport signal sur bruit plus interférences, la fiabilité, la bande passante, le temps de propagation et le degré d'occupation.

17. Emetteur selon la revendication 13, dans lequel le contrôleur (12) comprend une base de données et a pour fonction de mettre à jour les informations de la base de données sur les mécanismes d'accès (A₁...Aₙ) disponibles pour chaque classe de données.

18. Emetteur selon la revendication 13, 14 ou 15, dans lequel le contrôleur (12) est configuré pour surveiller les mécanismes d'accès (A₁...Aₙ) afin de renvoyer un signal indicatif de l'état de l'au moins un paramètre.

19. Emetteur selon la revendication 18, dans lequel le contrôleur (12) est configuré pour surveiller en tant que paramètre l'au moins un paramètre sélectionné dans le groupe comprenant : le rapport signal sur bruit, le rapport signal sur interférences, le rapport signal sur bruit plus interférences, la fiabilité, la bande passante, le temps de propagation et le degré d'occupation.

20. Emetteur selon l'une quelconque des revendications 18 ou 19, dans lequel le contrôleur (12) à pour fonction de mettre à jour la base de données en réponse au signal renvoyé par le dispositif de surveillance.

21. Réseau de communication comprenant un émetteur selon l'une quelconque des revendications 13 à 20.
